Europäisches Patentamt

European Patent Office

Office européen des brevets

(11) Veröffentlichungsnummer: **0 003 628**
A1

(12) **EUROPÄISCHE PATENTANMELDUNG**

(21) Anmeldenummer: 79200057.2

(22) Anmeldetag: 02.02.79

(51) Int. Cl.²: **B 68 G 11/04,** B 29 D 27/00,
B 32 B 3/28

(30) Priorität: 15.02.78 DE 2806264

(43) Veröffentlichungstag der Anmeldung: 22.08.79
Patentblatt 79/17

(84) Benannte Vertragsstaaten: **DE FR GB IT SE**

(71) Anmelder: **KARL-SCHMIDT GMBH, Christian-Schmidt-Strasse 8/12, D-7107 Neckarsulm (DE)**

(72) Erfinder: **Grosser, Werner, Hauptstraße 26, D-8751 Sulzbach (DE)**

(74) Vertreter: **Fischer, Ernst, Dr., Reuterweg 14, D-6000 Frankfurt am Main 1 (DE)**

(54) Verformungskörper aus Kunststoffschaum und Verfahren zu seiner Herstellung.

㉗ Bei einem mit einer Kunststoffolie überzogenen, aus Kunststoffschaum bestehenden Verformungskörper sind zum Zwecke der verbesserten Herstellung Kunststoffschaumabfallpartikel in einer luftdichten Kunststoffolie (1) eingepackt, die Packung unter Anlegen von Vakuum zum Verformungskörper (2) gepresst und die Ränder der Kunststoffolie luftdicht miteinander verschweisst.

EP 0 003 628 A1

- 1 -

KARL SCHMIDT GMBH                                  27.12.1978
Christian-Schmidt-Straße 8/12                      -DRQ/GKP-
7107 Neckarsulm

P 28 06 264.8

BEZEICHNUNG GEÄNDERT
siehe Titelseite

Verformungskörper aus Kunststoffschaum
----------------------------------------

Die Erfindung bezieht sich auf mit einer Kunststoffolie überzogene, aus Kunststoffschaum bestehende Verformungskörper, insbesondere zur Polsterung des Innenraums von Kraftfahrzeugen.

Zur Polsterung des Innenraums von Kraftfahrzeugen sind Polyurethanschaumstoffe bekannt, die mit vorgeformten Kunststoffolien aus Acrylnitril-Butadien-Styrol-Mischpolymerisaten oder Polyvinylchlorid überzogen sind. Die Herstellung dieser Kunststoffolien ist meist mit erheblichen Abfall durch Verschnitt verbunden. Nachteilig ist auch die meist mangelnde Haftung zwischen zelligem Kern und der Folie sowie die Weichmacherwanderung aus der Folie in den Schaumstoff, die oft zur Zerstörung des Schaumstoffs führt.

Diese Nachteile weisen Verformungskörper aus Polyurethan-Integralschaumstoff, bei denen zellfreie Randzonen und zelliger Kern in einem Arbeitsgang aus dem Reaktionsgemisch entstehen, nicht auf. Die Verarbeitung dieses Schaumstoffs ist jedoch mit einem erheblichen Verschnitt verbunden. Aus Gründen der Wirtschaftlichkeit wird der Verschnitt gemahlen oder geschnitzelt und die auf diese Weise erzeugten Schaumstoffpartikel unter Zusatz eines Bindemittels, beispielsweise eines Klebers oder eines Materials, das dem Kunststoffschaum entspricht, zu neuen Verformungskörpern verarbeitet.

Der Nachteil dieser Methode besteht darin, daß die aus gemahlenen oder geschnitzelten Kunststoffschaumabfällen hergestellten Verformungskörper eine schlechte ästhetische Wirkung aufweisen und der Verbund zwischen den Partikeln und dem Bindemittel teilweise mangelhaft ist.

Es ist die Aufgabe der vorliegenden Erfindung, aus den bei der Herstellung von Verformungskörpern aus Kunststoffschaum anfallenden gemahlenen oder geschnitzelten Abfällen in vereinfachter und kostensparender Weise Verformungskörper zu fertigen.

Die Lösung dieser Aufgabe besteht darin, daß gemahlene oder geschnitzelte Kunststoffschaumpartikel in eine luftdichte Kunststofolie eingepackt, die Packung unter Anlegen von Vakuum zum Verformungskörper gepreßt und die Ränder der Kunststofolie luftdicht miteinander verschweißt sind.

Durch die unterschiedliche Größe des angelegten Vakuums und die Dichte der Kunststoffschaumpartikel läßt sich die Härte der Verformungskörper beeinflussen.

Das erfindungsgemäße Verfahren bietet gegenüber dem Verfahren nach dem Stand der Technik den Vorteil, daß der bei der Verarbeitung von Kunststoffschaum anfallende Verschnitt in einfacher und kostensparender Weise ohne Verwendung eines Bindemittels auch zu größeren - wie Armaturenbrettabdeckungen - Verformungskörpern verarbeitet werden kann.

Zweckmäßigerweise sollte die den Verformungskörper überziehende Kunststoffolie eine hohe Reißfestigkeit aufweisen.

Die Kunststoffolie besteht vorzugsweise aus einem Acrylnitril-Butadien-Styrol-Mischpolymerisat und hat eine Dicke von 0,4 mm bis 0,8 mm. Die Dichte der verdichteten Kunststoffschaumpartikel beträgt 0,6 bis 0,9 g/cm$^3$.

Es kann vorteilhaft sein, wenn in den Verformungskörper metallische Einlagen zur Versteifung oder zur Befestigung angeordnet sind.

Die Herstellung der Verformungskörper erfolgt in der Weise, daß die Kunststoffschaumpartikel in eine sackartig ausgebildete Kunststoffolie eingefüllt, der gefüllte Sack in die geschlossene Preßform eingelegt und dieser Sack einem Preßdruck von 0,3 bis 1,5 bar, vorzugsweise 1 bar, für eine Zeitdauer von 2 bis 30 sec., vorzugsweise 10 sec., ausgesetzt und gleichzeitig die in dem Sack enthaltene Luft durch Anlegen von Vakuum je nach gewünschter Dichte entfernt wird. Am Ende des Preßvorgangs werden die Ränder der Öffnung des Kunststoffoliensacks miteinander verschweißt.

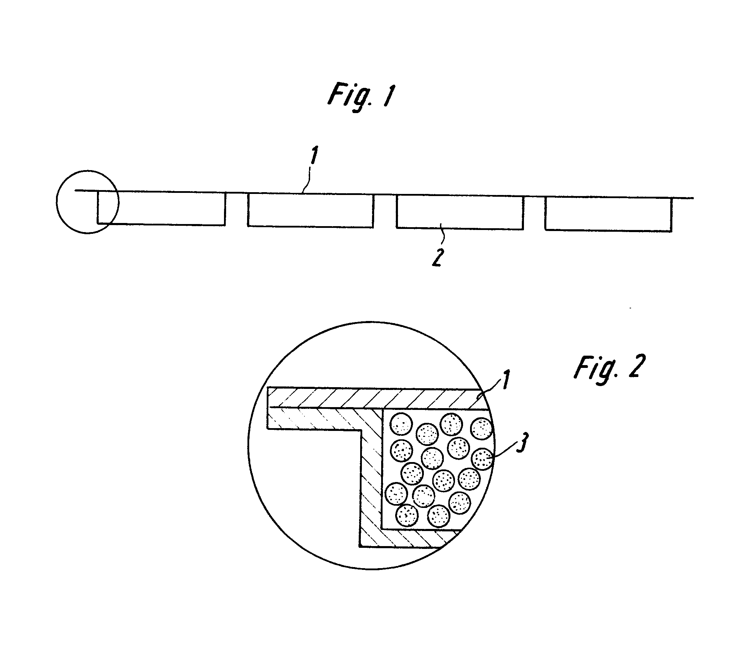

Die Zeichnung zeigt in Fig. 1 schematisch den Längsschnitt durch ein aus mehreren durch die Kunststoffolie 1 miteinander verbundenen Verformungskörpern 2 gebildetes
Polster für den Fahrgastraum von Kraftfahrzeugen.

In Fig. 2 ist in vergrößerter ausschnittsweiser Darstellung
der Randbereich des Verformungskörpers 2 mit den in die
Kunststoffolie 1 eingepackten Kunststoffpartikel 3
wiedergegeben.

A 6547

0003628

PATENTANSPRÜCHE
---------------

1. Mit einer Kunststoffolie überzogener, aus Kunststoffschaum bestehender Verformungskörper, insbesondere zur Polsterung des Innenraums von Kraftfahrzeugen, dadurch gekennzeichnet, daß gemahlene oder geschnitzelte Kunststoffschaumpartikel (3) in luftdichte Kunststofffolie (1) eingepackt, die Packung unter Anlegen von Vakuum zum Verformungskörper (2) gepreßt und die Ränder der Kunststoffolie luftdicht miteinander verschweißt sind.

2. Verformungskörper nach Anspruch 1, dadurch gekennzeichnet, daß die Dicke der Kunststoffolie (1) 0,4 bis 0,8 mm beträgt.

3. Verformungskörper nach Anspruch 1, dadurch gekennzeichnet, daß die Kunststoffschaumpartikel (3) auf eine Dichte von 0,6 bis 0,9 $g/cm^3$ verdichtet sind.

4. Verfahren zur Herstellung der Verformungskörper nach den Ansprüchen 1 bis 3, dadurch gekennzeichnet, daß die Kunststoffschaumpartikel in eine sackartig ausgebildete Kunststoffolie eingefüllt, diese in eine geschlossene Preßform eingelegt und die Kunststoffschaumpartikel bei einem Druck von 0,3 bis 1,5 bar, vorzugsweise 1 bar, 2 bis 30 sec., vorzugsweise 10 sec., lang verdichtet und gleichzeitig die Luft durch Anlegen eines Vakuums entfernt wird.

*Fig. 1*

1

2

*Fig. 2*

1

3

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A · 1 216 375 (TECHNIGAZ)<br><br>* Seite 1, Zeilen 17-27, Seite 3<br>Zeile 111; Seite 4, Zeilen<br>44-58 *<br><br>-- | 1,4 |
| A | GB - A - 879 433 (MONSANTO)<br><br>* Seite 1, Zeilen 54-75; Seite<br>2, Zeilen 5-7, 15-22 *<br><br>-- | 1 |
| A | LU - A - 57 984 (KOEPP)<br><br>* Seite 4, Zeilen 26-32; An-<br>sprüche 3,4,6 *<br><br>---- | 1 |

### KLASSIFIKATION DER ANMELDUNG (Int.Cl.²)

B 68 G 11/04
B 29 D 27/00
B 32 B 3/28

### RECHERCHIERTE SACHGEBIETE (Int. Cl.²)

B 68 G
B 29 D
B 65 D
E 04 B

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-04-1979 | SCHMIDL |

EPA form 1503.1 06.78